(19) Europäisches Patentamt
European Patent Office
Office européen des brevets

(11)     **EP 1 886 581 B1**

(12)                          **EUROPEAN PATENT SPECIFICATION**

(45) Date of publication and mention
of the grant of the patent:
**11.03.2009 Bulletin 2009/11**

(51) Int Cl.:
*A23K 1/16* (2006.01)        *A23K 1/17* (2006.01)
*A23K 1/18* (2006.01)        *G06Q 50/00* (2006.01)

(21) Application number: **06025784.7**

(22) Date of filing: **13.12.2006**

(54) **Ruminant animal feed formulations and methods of formulating same**

Tierfuttermittel für Wiederkauer und Methode zu dessen Formulierung

Aliment pour ruminant et méthode de formulation

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **11.08.2006 US 822088 P**

(43) Date of publication of application:
**13.02.2008 Bulletin 2008/07**

(73) Proprietor: **Maple Leaf Foods Inc.**
**Toronto ON M4V 3A2 (CA)**

(72) Inventors:
• **Steckley, David J.**
**Acton, Ontario L7J 2N7 (CA)**
• **Metcalf, John A.**
**Guelph, Ontario N1L 1N6 (CA)**
• **Waterman, Douglas F.**
**Madison, New York 13402 (US)**
• **Lowry, Dwain L.**
**Waterloo, Ontario N2J 1X4 (CA)**

(74) Representative: **de Saint-Palais, Arnaud Marie**
**Cabinet Moutard,**
**35, rue de la Paroisse**
**78000 Versailles (FR)**

(56) References cited:
WO-A-20/04034776          CA-A1- 2 320 687
US-A1- 2003 203 083       US-A1- 2004 076 659
US-B2- 6 814 988

• **MAKINTOSH ED, PHIPPS RH, SUTTON JD,
HUMPHRIES DJ, JID WILKINSON: "Effect of
monensin on rumen fermentation and digestion
and milk production in lactating dairy cows" J.
ANIM. FEED SCIENCES, vol. 11, 2002, pages
399-410, XP009080683**
• **EVANS EH, PATTERSON RJ: "Use of dynamic
modelling seen as good way to formulate crude
protein, amino acid requirements for cattle diets"
FEEDSTUFFS, 14 October 1985 (1985-10-14),
pages 24-25, XP009080686**

**Description**

This invention relates to ruminant animal feed formulations. Specifically, the invention relates to methods of formulating ruminant animal feed formulations that take into account the effects of rumen active feed additives.

**Background to Invention**

Many agriculturally-important animals, such as dairy cows, are ruminant, meaning that their digestive system includes a rumen. The rumen is a complex fermentation environment in which feedstuffs are broken down by microbial action to provide energy and protein nutrition for the ruminant animal. Different kinds of feedstuffs are broken down at different rates, and to different degrees of efficiency, depending on the characteristics of the animal, as well as the general properties of the rumen.

*Methods for Determination of Least Cost Formulation (LCF)*

The complexity of the rumen, and the breakdown of feedstuffs within the rumen, has led to the development of complex simulations and models of the rumen (hereinafter referred to as "methods"), which are used to predict the interactions of the rumen microbes with feedstuffs fed to the ruminant animal. These methods predict the interaction of microbes and feedstuffs, so that diets are more easily formulated to meet the ruminant animal requirements using available feedstuffs. These methods are often able to combine a variety of feedstuffs, so that diets comprising combinations of feedstuffs can be formulated to meet the requirements of the ruminant animal, or, for example, the minimum dietary requirements of the ruminant animal for the obtaining of a given, desired outcome (such as a certain quantity or quality of milk production). Methods that are able to determine formulations that meet the minimum nutrient requirements for a given animal, utilizing a selection of feedstuffs, are known as "methods for determination of minimum nutrient requirements", or "methods for determination of MNR".

The methods can further be combined with information regarding the cost and availability of each feedstuff, to determine the least cost formulation comprising the optimum combination of feedstuffs (given their availability and cost) to obtain the desired minimum dietary requirement for any particular ruminant animal. Such methods that can determine the least cost formulation are referred to as "methods for determination of least cost feed formulation" or "methods for determination of LCF". Historically, methods for determination of LCF have been used commercially to ensure that the desired nutritional requirements are met at the lowest possible feedstuff cost. Complex methods combine both determination of MNR and LCF.

Some methods for determination of LCF known in the art include computer-based models developed to connect animal biology with the least cost formulation process. For example, the Perfo-Lact method (Canada Packers Inc., Toronto, Ontario, Canada: Evans and Patterson, 1985), the Cornell Net Carbohydrate and Protein System (CNCPS) (Russell *et al* 1991; Fox, D. G. June 1992 and Fox *et al* 1992) and the CPM-Dairy method (Galligan, 1997) are all well known and well characterized in the art, and are good examples of the methods currently used by those who are preparing feed formulations for ruminant animals. These methods are extremely complex and not explained in detail here; instead, they are incorporated herein by reference.

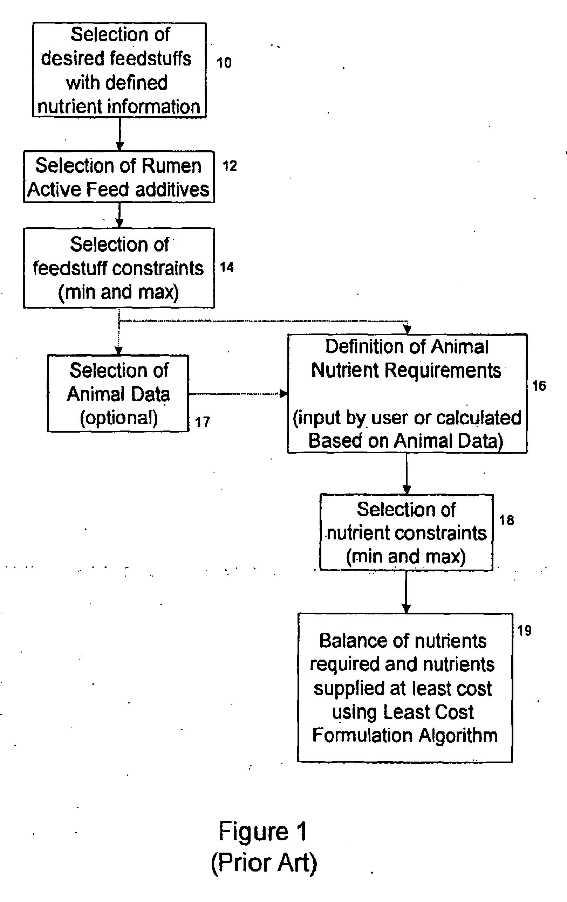

In general, the process path for utilizing most methods known in the art is summarized in Figure 1. The methods contain known information about the nutrient composition of a variety of feedstuffs. The methods are also able to simulate the efficiency and timing of the breakdown of any given feedstuff given information about a certain rumen animal. The methods are also, able to simulate rumen effects on the nutrients, for example, by utilizing the degradation of carbohydrates as a predictor for the amount of microbial protein, which may be produced on a given diet. Similar assumptions are made for protein degradation. Volatile fatty acid production from carbohydrates may also be predicted in more complex methods, as a more accurate approximation of the energy supply from the rumen.

A person using the method would select the feedstuffs available and desired to be fed to the animal. Feedstuffs that are considered by the model typically include com, soy, alfalfa, vitamins, minerals, molasses, fat sources, amino acid sources, undegradable intake protein, and a variety of other feedstuffs. For example, a method might contain nutrient information for 100 different feedstuffs. Nutrient information may include the nutrient composition, the degradation rates of that particular feedstuff e.g. Crude Protein, Ash, Fibre, Fat, Vitamins and mineral concentrations, with rates of degradation for protein and fibre. A person using the method would have certain feedstuffs available or desired for use in the formulation, for example, only 10 specific feedstuffs (corn silage, haylage, corn distillers grains, com, roasted soybeans, wheat shorts, Hi-Pro Soybean meal, porcine meat meal, whole cottonseeds, and feather meal, for example) might be available or desired to be used in the formulation. The person using the method would therefore select those 10 feedstuffs as a selection of desired feedstuffs (10).

As an optional step, available in some of the more sophisticated methods, the person using the method would then select which rumen active feed additives would be added to the formulation, in a selection of rumen active feed additives step (12). Rumen active feed additives, and their use, will be further elucidated below.

The person using the method would then typically input a selection of feedstuff constraints (14). For example, the person may only have a certain amount of corn silage available, in which case, the person would input a feedstuff constraint on the maximum allowable corn silage used in the formulation. Alternatively or in addition, a person may wish to use all of the haylage available to them over a period of time, and thus the person using the method would select a feedstuff constraint on the minimum amount of haylage used in the formulation.

Next, the person using the method would then input a definition of the animal nutrient requirements (16) for a particular animal. For example, it might be known that, for a specific ruminant animal, x kg of protein, y kg of fat, etc. per day, are required to produce the desired quantity and quality of milk. Alternatively, the person might input certain known parameters about the animal (Animal Data (17)), which would typically include the days in lactation, the milk yield, the weight of the animal, expected feed intake and the percentage of milk fat and protein found in the milk produced by the animal. These Animal Data would be used by the model to determine the animal nutrient requirements (16).

Finally, the person could (optionally) select nutrient constraints (18) for certain nutrients. For example, the person may desire to place maximum limits on fat content of the diet, or a minimum constraint on protein content in the diet.

From this information, the prior art method could formulate a least cost formulation (19) of feed ration which accurately meets the ruminant animal's nutrient requirements to support a desired level of growth or milk production, while taking into account available and desirable feedstuffs to be used in the formulation.

In this prior art method, the predicted nutrient supply from each feedstuff, the price of each feedstuff, and the Animal Nutrient requirements are all used to calculate a least cost feed formulation.

*Rumen Active Feed Additives*

Rumen active feed additives (RAFA) are non-nutritive substances (i.e. substances other than known nutrients) added to feeds that directly or indirectly affect the rumen flora and fauna, or otherwise improve the efficiency of rumen digestion (Cheeke, 1999). Many feed additives are known to be rumen active, and as such, change the benefits that the ruminant animal derives from the feedstuffs it consumes (Enjalbert *et al*, 1994; Wallace *et al*, 1994; Evans and Martin, 1997; Hoover *et al*, 1998; Eun *et al*, 2000; Julien 200; Mackintosh *et al*, 2002).

Examples of RAFA include yeast culture, live yeast, buffers, fermentation solubles, essential oils, surface active agents, monensin sodium, organic acids, and supplementary enzymes.

US patent publication 2004/0076659 A1 teaches improved particulate feed additives and methods for enhancing feed utilisation efficiency by adding an additive comprising a non-ionic surfactant and an antioxidant agent. Mackintosh et al. (Journal of Animal and Feed Sciences, 11, 2002, 399-410) teach that the addition of monensin to a dairy cow diet results in increased milk yield and reduced milk fat and milk protein contents. WO 2004/034776 teaches feeding meat-type poultry an animal feed poultry diet wherein the feed further comprises keratinase, for enhanced weight gain.

Though the metabolic effects of certain RAFA are known in general terms, it has been very difficult to incorporate these effects into methods for least cost formulation. To date, models for least cost formulation incorporating such RAFA have been rare, and have used crude estimations of the effects of the RAFA, by artificially creating a new category of feedstuff for each of these RAFA. The CPM-Dairy model has previously included effects of monensin sodium by increasing the amount of microbial protein expected when monensin sodium is included in the diet. This has led to either extremely complex models, which become impossibly complex when more than one rumen active feed additive is considered, or, conversely, simplistic rationalization and computation of the effects of the rumen active feed additive.

RAFA are also known to have interrelated metabolic effects. For example, two RAFA that work through different mechanisms may have an additive, or sometimes even synergistic effect on the efficiency of rumen digestion. Conversely, two RAFA that act on the same mechanism may only have marginally different effects than the use of one, or the other feed additive on its own. As can be appreciated by a person skilled in the art, the complexity of the effects of multiple RAFA on the digestion of the feedstuffs in the rumen of a ruminant animal increases exponentially as the number of RAFA in the feed increase. However, the effects of using multiple RAFA are not well known, and such effects can be surprising.

It would therefore be desirable to have a method for determining least cost feed formulations taking into account the effects of RAFA. It would also be desirable to have such a method wherein the combination effects of more than one RAFA can be taken into account.

## Brief Description of Figures

Figure 1 is a flow chart describing the prior art method for Determining least cost feed formulations.

Figure 2 is a flow chart describing an aspect of the present invention for determining least cost feed formulations.

## Summary of the Invention

The present invention is a method for preparing a feed formulation for a ruminant animal, comprising: selecting at least one desired feedstuff to be fed to the ruminant animal, said at least one desired feedstuff having a nutrient composition and a cost, said nutrient composition having a quantity of nutrient for a multiplicity of nutrients; providing a definition of animal nutrient requirements for the ruminant animal, said definition of animal nutrient requirements having a minimum nutrient requirement and/or a maximum nutrient requirement for a multiplicity of nutrients; selecting at least one potential Rumen Active Feed Additive (RAFA); determining the effect of the selection of said potential RAFA to the nutrient composition of each desired feedstuff; calculating the revised nutrient composition of each desired feedstuff from the effect of said potential RAFA and from the nutrient composition of said desired feedstuff; determining the least cost feed formulation by calculating a feedstuff mix comprising a quantity for each desired feedstuff, wherein the feedstuff mix provides the minimum and/or maximum nutrient requirements at the lowest possible cost, as calculated using the revised nutrient composition of each desired feedstuff; and preparing said least cost feed formulation by mixing said quantity of said at least one desired feedstuff with said potential RAFA. The calculation of the revised nutrient composition may be made, by determining a coefficient by which to correct the quantity of nutrient. The calculation of the feedstuff mix may be through the use of the Perfo-Lact method.

In a further aspect of the present invention, the definition of animal nutrient requirements is calculated using a selection of animal data for the ruminant animal. The animal data may comprise, for example, the lactation data, days in milk data, milk yield data, milk fat percentage data, milk protein percentage data, and/or liveweight data for the animal.

In a further aspect of the present invention, the effect of the at least one potential Rumen Active Feed Additive (RAFA) to the nutrient composition of each desired feedstuff is a cumulative effect of more than one RAFA.

In yet a further aspect of the present invention, the RAFA is one or more of a surfactant, an ionophore, a bioactive peptide, an additive which stimulates microbial activity, an additive which inhibit microbial activity, a direct fed live microbial culture, a high phenolic plant extract, a saponin, a natural extract, an unprotected fat, an unprotected oil, a synthetic flavoring substance, an oleoresin, a mixed branched chain volatile fatty acid, a buffer, a surface active agent, an antibiotic, an organic acid, or a supplementary enzyme. In a further aspect, the ionophore may be monensin sodium. In a further aspect, the additive, which stimulates microbial activity is yeast culture, live yeast, a botanical, or a fermentation soluble. In a further aspect, the additive, which inhibits microbial activity is monensin sodium or an essential oil. In a further aspect, the high phenolic plant extract is a botanical. In a further aspect, the natural extract is a botanical. In a further aspect, the flavoring substance is a botanical or an essential oil.

In a further aspect of the present invention, the method further comprises the step of providing at least one feedstuff constraint, wherein said feedstuff constraint limits either a minimum or a maximum quantity of a feedstuff in the feedstuff mix.

In a further aspect of the present invention, the method further comprises the step of providing at least one nutrient constraint, wherein said nutrient constraint limits either a minimum or a maximum quantity of a nutrient in the feedstuff mix.

In a further aspect of the present invention, the nutrient composition and cost of the at least one desired foodstuff is located in a database. Such database may be updated automatically.

In a further aspect of the present invention, one or more of the steps of the method are done by a computer, for example, determining the least cost feed formulation by calculating a feedstuff mix comprising a quantity for each desired feedstuff, and/or calculating the true nutrient composition of each desired feedstuff from the effect of the selection of at least one potential RAFA and from the nutrient composition of said desired feedstuff can be done by a computer.

A further embodiment of the present invention is the use of any of the methods outlined herein for the preparation of a least cost feed formulation.

## Detailed Description of the Invention

A prior art method for determining LCF (Evans and Patterson 1987) was used as the basis of the method described herein, is described in Figure 1. The prior art method utilizes several kinetic parameters, including rate of protein degradation, rate of soluble fibre degradation, rate of hydration, rate of starch degradation, rate of methane production, and the cation exchange capacity. These and other kinetic parameters are utilized by the least cost formulation module of the method to calculate the supply of rumen available carbohydrate and protein from the selection of desired feedstuffs (10), as well as from other selections entered by the user, including the selection of feedstuff constraints (14), animal data (16), and selection of nutrient constraints (18). The prior art methods include a feedstuff database, that provides nutrient values for each feedstuff, as described above. These nutrient values were characterized by laboratory analysis. The prior art methods do not include a selection of RAFA (12) component, or, optionally, use a rudimentary RAFA selection component.

*RAFA*

Certain RAFA, and some of their effects, are known in the art (Enjalbert *et al,* 1994; Wallace *et al,* 1994; Evans and Martin, 1997; Hoover *et al,* 1998; Eun *et al,* 2000; Julien 200; Mackintosh *et al,* 2002). Others were identified and characterized by experimentation, as described below.

RAFA studied and incorporated into the method disclosed herein include yeast culture, fermentation solubles, essential oils, surface active agents, monensin sodium and organic acids, though it would be evident to a person skilled in the art that the method could equally be applied to other RAFA through minimal experimentation.

The effect of each individual additive was determined as relating to one or more of the kinetic parameters of the prior art method (Evans and Patterson 1987), such as rate of protein degradation, rate of soluble fibre degradation, rate of hydration, rate of starch degradation, rate of methane production and the cation exchange capacity. This effect was calculated based on what was previously known in the art.

*Method of Determining LCF taking into account the effects of RAFA*

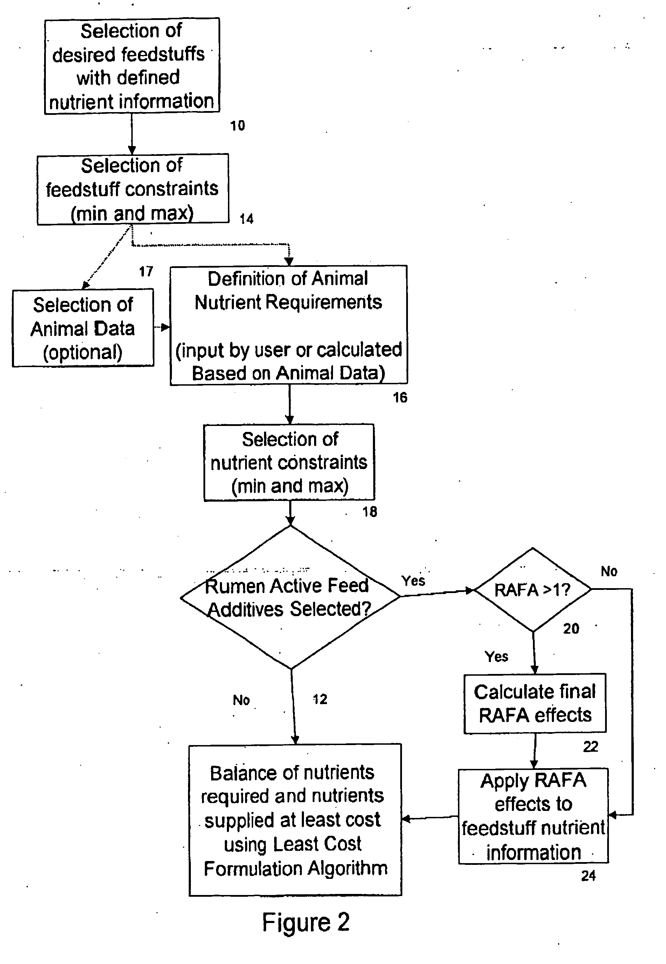

A method of determining LCF taking into account the effects of RAFA is described below, and illustrated in Figure 2.

One difference between this method and the method known in the prior art is the "RAFA loop" (20, 22, and 24). Once a user selects which RAFA are to be added to the formulation, the method determines whether there is one or more RAFA to be added (20). If there are more than one RAFA to be added to the formulation, the method calculates the final RAFA effects (22) on the feedstuff nutrient information. If there is only one RAFA to be added to the formulation, the method utilizes the effect of that RAFA on the feedstuff nutrient information as the final RAFA effect on the feedstuff nutrient information.

The manner in which the method calculates the final RAFA effects (22) on the feedstuffs is exemplified in Example 1, described in detail below, and demonstrated in Table 14. The method applies the RAFA effects to the feedstuff nutrient information (24) and this is incorporated by the method into the calculation of nutrient supply from all of the ingredients selected in the selection of desired feedstuffs (10), as previously selected by the user of the method. Typically, a RAFA has an overall positive effect, i.e., it will increase the availability or effective quantity of nutrient supply in a feedstuff. Generally, once a RAFA is added to a feed formulation, the method will allow for lower density feedstuffs to be used to meet the nutrient requirements for the animal. If the cost of the RAFA outweighs the cost savings from the use of the lower nutrient density ingredients, then the net result will be a higher ration cost, compared to the solution without rumen additive effects.

Several of the rumen additives affect the same parameters within the method, and these responses are often not additive. Such non-additivity is described mathematically so that cumulative effects of multiple additives on nutrient yield are accurately predicted. With conventional (prior art) feed formulation systems there is no quantitative method to account for the non-additivity to multiple feed additives. The benefit to the user is that the method offers solutions where the user can determine the cost effectiveness of any given additive, or combination of additives relative to the expected production of the ruminant animal offered the diet.

The effect of feed additives on the appropriate parameters can be determined, using routine experimentation, or the current knowledge in the art. The present invention can be applied to any existing formulation method once the effect of feed additives on the appropriate parameters has been determined.

The present invention provides a more scientific and cost effective diet formulation. This approach benefits any farmer of ruminant species purchasing feed, because it allows the benefit of feed additives to be incorporated into the LCF process.

*Example 1: Calculation of protein using LCF process*

Protein is defined in most known methods by five factors, which are used in conjunction with the crude protein and animal defined factors to estimate the amount of escape protein (EP - protein which reaches the small intestine and is available for digestion and absorption by the animal) provided by any given feedstuff. The method factors are the A, B and C fractions, representing the rumen available, escape and indigestible fractions of the protein (Ørskov and Mc-Donald, 1979), and the rates at which fractions A and B are degraded, named $K_A$ and $K_B$. The other factor required is the rumen solid outflow rate, represented as $K_S$.

The equation combining these factors to determine the amount of protein readily available to the cow is represented as:

$$EP = (A*K_S)/(K_A+K_S) + (B*K_S)/(K_B+K_S)$$

Essential oils, which are recognized rumen modifiers, are known to affect the $K_B$, and this has been quantified through published literature (Wallace *et al*, 2002). In this embodiment of the invention, the $K_B$ rate for each ingredient is multiplied by the appropriate factor to change the $K_B$ to account for the effect of the essential oil. The calculation of the EP is then made using the modified $K_B$ resulting in a higher EP value. This higher value would then be used in the LCF calculation. The resulting calculation of protein available to the cow would thus be represented as:

$$EP = (A*K_S)/(K_A+K_S) + (B*K_S)/((K_B*\text{Essential Oil Factor})+K_S)$$

*Example 2 - Determination of the effect of a RAFA on $K_B$; determination of how a specific RAFA effects the parameters of the method*

Monensin sodium, surface active agents (surfactant), and an essential oil are RAFA known to affect rumen fermentation. The effects of these RAFA were determined, in order to determine the appropriate adjustments on the slowly degradable protein rate function in the Perfo-Lact model when the RAFA are available.

The use of the RAFA, were compared with an animal control. A four by four latin square design was used, employing four rumen-fistulated cows. Cows were fed a standard TMR (total mixed ration) for at least 7 days prior to the start of the experiment, and were assigned to one of the following four 21 day ration sequences: ABCD, BCDA, CDAB, and DABC, where A, B, C, and D are as follows: (A) control (standard TMR); (B) Monensin (control diet plus 200 mg/kg monensin); (C) Surfactant (control diet plus 316 mg/kg Surfactant); (D) Essential Oil (control diet plus 5 mg/kg Essential Oil).

Rumen fluid was sampled via the fistula using the Geishawer probe according to standard methodology, with sampling done 2 hours pre-feeding, and again at 2, 4, and 6 hours post-feeding at day 19, 20 or 21 of a 21 day feeding period. Fluid was strained through 4 ply cheesecloth into duplicate containers treated with phosphoric acid (preservative). At the end of each feeding period, rumen fluid from the 2 hours pre-feeding sample was placed into a prewarmed half litre vacuum flask and forwarded for *in vitro* studies, described below. The vacuum flask was filled and covered immediately after sampling.

Various measurements and assays were undertaken from the samples taken, as follows.

*(a) rumen fluid pH and volatile fatty acid measurement*

Rumen fluid pH and volatile fatty acids (VFA) were measured. Rumen pH and VFA were summarized in tables 1, 2 and 3, below.

Table 1: Rumen pH and total VFA by time across all treatments

| Item | Rumen pH | Total VFA mmol/L |
|---|---|---|
| **P value time** | <0.001 | <0.001 |
| **P value period** | 0.53 | <0.001 |
| **P value ration** | 0.94 | <0.001 |
| **2 hr pre feed** | 6.46[c] | 89.80[a] |
| **2 hr post feed** | 6.12[b] | 103.30[b] |
| **4 hr post feed** | 5.83[a] | 111.66[c] |
| **6 hr post feed** | 5.79[a] | 106.48[d] |

Means within the same column of data having differing subscripts different significantly (P<0.05).

Table 2: Rumen pH by treatment across all time points

| Item | Rumen pH |
|---|---|
| **P value time** | <0.001 |
| **P value period** | 0.53 |
| **P value ration** | 0.94 |
| **Control** | 6.02 |
| **Monensin** | 6.07 |
| **Surfactant** | 6.07 |
| **Essential Oil** | 6.05 |

Table 3: Rumen VFA (total and molar percentage) by treatment (Acetic = acetic acid; Prop = propionic acid; i-But = i-butyric acid; n-But = n-butyric acid; i-Val = i-valeric acid; n-Val = n-valeric acid.

| Item | VFA, total mmol/L | Acetic | Prop | i-But | n-But | i-Val | n-Val |
|---|---|---|---|---|---|---|---|
| **P value treatment** | <0.001 | <0.001 | <0.001 | 0.01 | 0.09 | <0.001 | <0.001 |
| **Control** | 98.54[c] | 58.76[c] | 25.18[c] | 0.9b[ab] | 12.81 | 1.04[a] | 1.25[c] |
| **Monensin** | 102.64[b] | 57.90[b] | 24.91[c] | 0.95[b] | 12.33 | 1.08[c] | 2.82[b] |
| **Surfactant** | 105.26[a] | 57.06[a] | 24.58[b] | 1.00[a] | 12.89 | 0.99[b] | 3.49[b] |
| **Essential Oil** | 104.79[2b] | 56.63[a] | 25.83[a] | 0.97[ab] | 12.42 | 1.05[a] | 3.10[a] |

Means within the same column of data having differing subscripts different significantly (P<0.05).

While rumen fluid sampling time had a significant (P<0.001) effect on rumen pH and total VFA content as expected, treatment did not significantly (P = 0.94) affect rumen pH. Total VFA yields exceeded the control for all treatments (P<0.05). Propionic acid molar percentage was highest with the Essential Oil treatment. Molar yields of propionate were similar for monensin and Surfactant (25.56 and 25.87 respectively) but less than that for Essential Oil (27.07) while all were greater than that of the control (24.81) (P<0.05).

VFA production can be used as an adjustment factor to express the benefit of additives on protein degradability.

*(b) Milk production*

Daily milk production and feed consumption was recorded, for the duration of the trial, and summarized in Table 4, below.

Table 4: Milk Production and Dry Matter Intake

| Item | Milk kg/day | DMI kg/day | Milk/kg DMI |
|---|---|---|---|
| **P value period** | 0.66 | <0.001 | 0.001 |
| **P value treatment** | 0.21 | 0.004 | 0.60 |
| **Control** | 41.0 | 24.3[ab] | 1.69 |
| **Monensin** | 43.7 | 24.7[ab] | 1.77 |
| **Surfactant** | 43.6 | 25.2[b] | 1.74 |
| **Essential Oil** | 41.7 | 23.9[a] | 1.77 |

Means within the same column of data having differing subscripts different significantly (P<0.05).

Treatment had no significant impact on milk yield or efficiency of feed utilization, however dry matter intake was significantly higher on the Surfactant treatment compared with the Essential Oil treatment.

*(c) Rumen Gas Production*

Rumen fluid samples were also added to buffer and food source, and gas production was recorded from time 0 to 6 hours. Results were tabulated in Table 5, below.

Table 5. Rumen Gas production by treatment and soy process

| Item | GAS (ml) |
|---|---|
| **P value period** | < 0.001 |
| **P value time** | < 0.001 |
| **P value treatment** | < 0.001 |
| **P value soy treatment** | < 0.001 |
| **Control** | 12.19[d] |
| **Monensin** | 10.39[c] |
| **Surfactant** | 10.64[b] |
| **Essential Oil** | 11.35[a] |
| | |
| **Item** | **GAS** |
| **Soybean meal incubated** | 11.70[a] |
| **Top Soy incubated** | 10.58[b] |

Means within the same column of data having differing subscripts different significantly ($P<0.05$).

Gas production was significantly reduced by all treatments, compared with control. Incubation with modified soybean meal (Top Soy) resulted in significantly less gas production than when rumen fluid was incubated with untreated soybean meal, an indication that the modified soybean treatment RAFA resists microbial attack and is not reversed or affected by RAFA.

*(d) temperature, pH, and redox on strained and unstrained rumen fluid*

Temperature, pH, redox on strained and unstrained rumen fluid were measured to assess viability and consistency. The rumen fluid was incubated for 6 hours at 39° C with (1) control 0.13 g soybean meal (SBM) and 0.13 g TMR food sample; and (2) test 0.13 g Top Soy and 0.13 g TMR. Samples were analyzed for ammonia concentration and substrate disappearance.

Table 6: Redox, Dry Matter Disappearance (DMD)% and pH by treatment and soy process

| | Redox (seconds) at $T_0$ | DMD % | pH at $T_0$ |
|---|---|---|---|
| **P value treatment** | 0.72 | 0.20 | 0.99 |
| **Control** | 32 | 40.67 | 6.26 |
| **Monensin** | 30 | 40.43 | 6.31 |
| **Surfactant** | 38 | 40.83 | 6.34 |
| **Essential Oil** | 36 | 41.32 | 6.33 |
| | | | |
| | **DMD%** | | |
| **P value soy treatment** | <0.001 | | |

(continued)

|  | DMD% |  |
|---|---|---|
| **Soybean meal** | 50.72a |  |
| **Top Soy** | 30.91b |  |

Means within the same column of data having differing subscripts different significantly (P<0.05).

All treatments had similar levels of cell viability (redox) and pH upon arrival at the lab. Treatment did not affect dry matter digestion or pH at the conclusion of the incubation period.

The use of the Top Soy process on soybean meal resulted in significantly lower dry matter digestibility consistent with the observation of lower gas production.

Concentration and breakdown of volatile fatty acids (VFA) in vitro were tabulated in Table 7, below, as results of statistical analysis across all timepoints.

Table 7: Concentration and breakdown of VFA *in vitro,* by Soybean process.

| Item | VFA total mmol/L | Acetic | Prop | i-But | n-But | i-Val | n-Val |
|---|---|---|---|---|---|---|---|
| **P value treat** | <0.001 | 0.005 | <0.001 | 0.41 | <0.001 | <0.001 | <0.001 |
| **Control** | 76.20c | 59.69b | 24.53b | 1.18 | 11.81c | 1.47b | 1.30b |
| **Monensin** | 75.030c | 58.62a | 25.51a | 1.18 | 12.09bc | 1.44b | 1.16c |
| **Surfactant** | 71.42b | 58.28a | 25.20a | 1.97 | 11.96b | 1.26a | 1.32b |
| **Essential Oil** | 72.84a | 58.52a | 25.18a | 1.30 | 12.51ac | 1.27a | 1.23a |
| *in vitro* **VFA by Soybean process** | | | | | | | |
| Item | VFA total mmol/L | Acetic | Prop | i-But | n-But | i-Val | n-Val |
| **P value treat** | <0.001 | 0.001 | <0.001 | 0.30 | <0.001 | <0.001 | <0.001 |
| **Soybean meal** | 75.16b | 58.29b | 25.44b | 1.61 | 11.93b | 1.44b | 1.29b |
| **Top Soy** | 72.58a | 59.27a | 24.77a | 1.21 | 12.25a | 1.28a | 1.22a |

Means within the same column of data having differing subscripts different significantly (P<0.05).

Unlike with VFA analysis on rumen fluid sampled at the farm, treatment did not consistently increase total VFA yield over control. However all treatments apart from the control resulted in incubations that produced significantly higher molar propionate percentages. When *in vitro* data was analyzed by source ofincubated soybean meal (untreated or Top Soy) the untreated soybean meal resulted in a higher VFA yield or molar percentage except for acetic and butyric acids. The higher VFA yield is likely indicative of increased microbial fermentative activity where there was no protection (i.e. untreated) from microbial degradation of the protein. It is noteworthy that the proportion of i-valeric and n-valeric acids were significantly lower for the Top Soy treatments, indicating that there was reduced degradation of the branch-chain amino acids compared to the untreated soy control, supporting the conclusion that the treated product was protected from degradation.

*(e) Rumen ammonia level by treatment and soy process*

Rumen ammonia level, by treatment and soy process, was tabulated in Table 8, below.

Table 8: Rumen ammonia level by treatment and soy process

| ITEM | Baseline-corrected Ammonia post incubation mg/L | Baseline-corrected percent Ammonia reduction with Top Soy relative to SBM |
|---|---|---|
| **P value treatment** | <0.001 | 0.91 |
| **Control** | 31.69c | 39.23 |
| **Monensin** | 27.49a | 45.26 |
| **Surfactant** | 23.41b | 48.31 |

(continued)

| ITEM | Baseline-corrected Ammonia post incubation mg/L | Baseline-corrected percent Ammonia reduction with Top Soy relative to SBM |
|---|---|---|
| Essential Oil | 27.58[a] | 45.24 |
| | | |
| ITEM | Baseline-corrected Ammonia post incubation mg/L | |
| P value soy treatment | <0.001 | |
| Soybean meal | 34.59[a] | |
| Top Soy | 20.50[b] | |

Means within the same column of data having differing subscripts different significantly (P<0.05).

All treatments significantly reduced (baseline-corrected) ammonia levels (Table 8) over that of the control (P<0.001). This did not translate into a significant percentage reduction relative to SBM when Top Soy was incubated with products but the trend was similar. This observation is consistent with claims accorded to monensin and the Essential Oil that there is less degradation of protein when they are present at required levels in the rumen environment. A similar assumption can be made for the use of Surfactant.

*Conclusion*

Use of monensin sodium, Surfactant, or Essential Oil all stimulated rumen microbial activity as indicated by gas production response, and VFA profile both *in vivo* and *in vitro.* Rumen fluid from cows exposed to one of the three additives resulted in incubations yielding significantly higher molar percentages of propionic acid over the control treatment. This is consistent with other fistulated cow studies involving monensin sodium.

Evidence of reduced ammonia accumulation in the incubated rumen fluid when Top Soy was used is consistent again with previous observations both in respect of impact of the Top Soy process and the use of the rumen additives monensin sodium, Surfactant, or Essential Oil.

This trial further validates the adjustments applied to $K_B$ in the method when monensin sodium, Surfactant or Essential Oil are included in the diet. Adjustment factors for each RAFA were calculated as the ratio of additive ammonia production to that of the control and applied to the $K_B$ during formulation. Using this approach, we found that $K_B$ can be adjusted in the model by the following factors:

$$\text{Monensin} = 27.49/31.69 = 0.87$$

$$\text{Surfactant} = 23.41/31.69 = 0.74$$

$$\text{Essential Oils} = 27.58/31.69 = 0.87$$

*Example 3 -Determination of the additive effects of RAFA on $K_d$; determination of how combinations of RAFA effects the parameters of the method*

*(α) Combination of Monensin and Vegetable Oil*

Monensin sodium has been recognized as a RAFA that improves feed efficiency and results in a shift from methane production towards increased propionate production as a result of altered microbial populations. Both soy oil and calcium salts of soy oil have been fed to influence milk fat percentage and milk fatty acid profile. Though the effects of feeding ruminally active lipids in terms of fibre digestion, methane production and VFA yields have been reported quite extensively in the literature, there is little or no similarly derived information about the effects of calcium salts of soy oil in the same rumen environment.

One objective of this experiment was to compare these lipid sources (soy oil and calcium salts of soy oil) with each other and in the presence and absence of monensin sodium.

Production of iso-valenc acid and n-valeric acid was also used to estimate the level of protein (specifically branched chain amino acid) degradation in the rumen (Benchaar *et al* 1998), and results of VFA production can thus be used as an adjustment factor to express the benefit of such additives on protein degradability. This measure was used in the current experiment to demonstrate effects on $K_B$, as ammonia concentrations were not measured.

The measurement of rumen gas production over time is a well described technique (Minson 1998) and is subject to small variation between laboratories. In this laboratory, the substrate employed in all experiments was based on a dried TMR sample. Data from gas measurement observations using two replicates (true volume corrected by subtraction of corresponding negative control values at similar time point) was analyzed by ANOVA with time, treatment, and replicate as main effects in the model. The interaction of time by treatment by replicate was used as the error term. Dry matter digestibility was analyzed by ANOVA with treatment as the main effect in the model and treatment by replicate interaction as the error term. VFA parameters were analyzed by ANOVA with treatment as the main effect in the model and treatment by replicate interaction as the error term.

The different treatment groups were summarized in Table 9.

Table 9. Treatments and levels of Monensin, Soy Oil and Ca salts of Soy Oil.

| Experiment | Experiment Treatment Level |
|---|---|
| Treatment | Level in Rumen Fluid |
| TMR + Monensin + Soy Oil | 6.6 mg/L monensin + 6 g/L lipid |
| TMR + Monensin + CaSalts Soyoil | 6.6 mg/L monensin + 6 g/L lipid |
| TMR + CaSalts Soyoil | 6 g/L lipid |
| TMR + Soy Oil | 6 g/L lipid |
| TMR + Monensin | 6.6 mg/L monensin |

Statistical summaries are given in Tables 10-12 below for Mean Gas Production (0 to 6 hours incubation), DMD (Dry Matter Digestibility) %, VFA Tot. (Volatile Fatty Acids total moles), Acetic, Propionic, Butyric, Isobutyric, Isovalenic, and n-Valeric acids (molar percentages).

Table 10. Gas production (ml) calculated as increase over Control

| Treatment | Mean Gas ml 0-6 hr |
|---|---|
| TMR + Monensin + Soy Oil | -0.02[a] |
| TMR + Monensin + CaSalts Soyoil | 1.28[b] |
| TMR+ CaSalts Soyoil | 2.31[c] |
| TMR+ Soy Oil | 2.71[d] |
| TMR + Monensin | 5.31[e] |

Means within the same column of data having differing subscripts different significantly (P<0.05).

Table 11. Dry matter disappearance (%) and total VFA production (moles)

| Treatment | DMD% | VFA, moles |
|---|---|---|
| TMR + Monensin + Soy Oil | 24.9[c] | 44.25[b] |
| TMR + Monensin + CaSalts Soyoil | 43.5[a] | 52.8[a] |
| TMR + CaSalts Soyoil | 42.4[a] | 52.7[a] |
| TMR + Soy Oil | 36.02[b] | 48.86[a] |
| TMR + Monensin | 43.48[a] | 52.51[a] |

Means within the same column of data having differing subscripts different significantly (P<0.05).

Table 12. VFA (molar %)

| Treatment | Acetic | Prop | n-But | i-But | i-Val | n-Val |
|---|---|---|---|---|---|---|
| TMR + Monensin + Soy Oil | 64.88[a] | 19.31[c] | 9.04 | 1.36[b] | 3.27[b] | 2.13 |
| TMR + Monensin + CaSalts Soyoil | 60.16[b] | 22.05[a] | 11.22 | 1.12[c] | 3.29[b] | 2.16 |
| TMR + CaSalts Soyoil | 62.46[ab] | 17.88[d] | 10.79 | 1.66[a] | 4.51[a] | 2.69 |
| TMR+Soy Oil | 63.94[ab] | 17.02[e] | 10.38 | 1.71[a] | 4.42[a] | 2.53 |
| TMR + Monensin | 60.97[ab] | 20.82[b] | 10.79 | 1.06[c] | 4.65[a] | 1.71 |

Means within the same column of data having differing subscripts different significantly (P<0.05).

Both lipid sources significantly reduced gas yields over time, and in combination with monensin sodium, more so (Table 10). This pattern was seen when monensin sodium and calcium salts or soy oil alone were compared with monensin sodium data. Dry matter digestibility was significantly compromised by addition of soy oil either alone or combined with monensin sodium. This negative effect was not observed when Ca salts were used. The monensin sodium and soy oil combination compromised VFA yields (Table 11), while monensin sodium alone or combined with calcium salts of soy oil yielded the highest percentage of propionate (Table 12).

VFA data for oil and monensin sodium treatments (Table 12) showed differential effects on acetate, propionate, i-butyrate and i-valerate for different treatment combinations. Monensin sodium in combination with Ca salts depressed acetate but increased propionate compare to other treatments while soy oil in combination with monensin sodium showed a stimulation of both acetate and propionate at the expense of i-butyrate and i-valerate (comparison with soy oil or monensin treatments). This suggests that the actions of soy oil and monensin sodium would be additive in the rumen.

*Conclusions*

Digestibility and fermentative output will not be compromised if a rumen protected source of long chained fatty acids (such as Soylac, protected soy oil) is fed.

Use of unprotected oils significantly compromises digestibility and VFA yields.

The benefits of using monensin sodium are not compromised in the presence of a protected source of long chained fatty acids such as soy oil.

This trial further validates the adjustments applied to $K_B$ when monensin and soy oil are included in the diet either separately or in combination. Adjustment factors are calculated as the ratio of rumen active feed additive valerate production (i-valeric acid plus n-valeric acid) in the combination treatment to that of the control (TMR with CaSalts of SoyOil). Using this approach, $K_B$ can be adjusted by the following factors:

$$\text{Monensin} = 6.36/7.20 = 0.88$$

$$\text{SoyOil} = 6.95/7.20 = 0.97$$

$$\text{Monensin} + \text{SoyOil} = 5.40/7.20 = 0.75$$

The size of the factor when Monensin and SoyOil were combined indicates an additive effect. Similar experiments were conducted with other RAFA to determine which showed interactions and which did not.

*(b) Combination of surfactant, fermentation solubles, Organic acid and yeast culture*

The protocol used in Example 3a was also used in 3b to investigate the additive effects of other RAFA

Table 13. Treatments and levels of Surfactant, fermentation solubles, organic acid and yeast culture.

| Experiment | Experiment Treatment Level |
|---|---|
| Treatment | Level in Rumen Fluid |
| TMR + Surfactant | 328 mg/L Surfactant |

(continued)

| Experiment | Experiment Treatment Level |
|---|---|
| TMR + Fermentation solubles | 12 g/L Fermentation solubles |
| TMR + Surfactant + Fermentation solubles | 328 mg/L Surfactant + 12 g/L Fermentation solubles |
| TMR + organic acid | 250 mg/L organic acid |
| TMR + Surfactant + organic acid | 328 mg/L Surfactant + 250 mg/L organic acid |
| TMR + Yeast Culture | 643 mg/L Yeast culture |
| TMR + Surfactant + Yeast Culture | 328 mg/L Surfactant + 643 mg/L Yeast culture |
| TMR + Surfactant +Yeast Culture + organic acid | 328 mg/L Surfactant + 643 mg/L Yeast culture + 250 mg/L organic acid |

Statistical summaries are given in Tables 14-16 below for Mean Gas Production (0 to 6 hours incubation), DMD (Dry Matter Digestibility) %, VFA Tot. (Volatile Fatty Acids total moles), Acetic, Propionic, n-Butyric, Isovaleric, and n-Valeric acids (molar percentages).

Table 14. Gas production (ml) calculated as increase over negative Control

| Treatment | Mean Gas ml 0-6 hr |
|---|---|
| Surfactant | 0.89[a] |
| Fermentation solubles | 13.55[b] |
| Surfactant + Fermentation solubles | 14.99[b] |
| Organic acid | 1.94[a] |
| Surfactant + Organic acid | 2.23[a] |
| Surfactant + Yeast Culture | 1.33[a] |
| Yeast Culture | 0.85[a] |
| Surfactant + Yeast Culture + Organic acid | 2.74[a] |

Means within the same column of data having differing subscripts different significantly ($P<0.05$).

Fermentation solubles increased gas production volume compared to other treatments, due to the higher level of inclusion and nutrients in this product. There was no significant increase in gas production over the negative control when surfactant was included with any of the treatments singly or in a combination (Table 14). When DMD was examined, there was no significant effect of the combination of Fermentation solubles with surfactant, compared to fermentation solubles alone. Likewise there was no additivity between surfactant and organic acid or yeast culture alone, although a 3-way combination of surfactant, yeast and organic acid showed a significantly lower ($P<0.05$) DMD compared to all individual and combination results except far yeast culture alone (Table 15).

Table 15: Dry Matter Digestibility % (DMD)

| Item | DMD % |
|---|---|
| Surfactant | 34.1[c] |
| Fermentation solubles | 29.6[bd] |
| Surfactant + Fermentation solubles | 28.9[d] |
| Organic acid | 31.5[bcd] |
| Surfactant + Organic acid | 28.1[d] |
| Yeast Culture | 25.1[ad] |
| Surfactant + Yeast Culture | 28.4[d] |
| Surfactant + Yeast Culture + Organic acid | 21.3[a] |

13

Means within the same column of data having differing subscripts different significantly (P<0.05).

VFA data (Table 16) showed no additive effects of the different combinations of RAFA with surfactant on VFA yield. The only statistically significant affect of a combination of RAFA on VFA profile was a decrease in n-valeric acid concentration when surfactant and Organic acid were combined (P<0.01).

Table 16: VFA Expressed as total yields (mmol/L) and molar percentages

| Treatment | VFA mmol/L | VFA (mmol/100 mmol) | | | | |
|---|---|---|---|---|---|---|
| | | Acetic | Prop | But | i-Val | n-Val |
| Surfactant | 34.3[a] | 61.9[a] | 21.5[b] | 8.9[ab] | 0.8 | 0.9[ab] |
| Fermentation solubles | 56.9[b] | 60.1[bc] | 28.8[a] | 9.9[ab] | 0.3 | 0.8[abc] |
| Surfactant + Fermentation solubles | 57.7[b] | 59.0[c] | 29.4[a] | 10.3[b] / | 0.7 | 0.7[abc] |
| Organic acid | 37.9[a] | 66.3[a] | 23.1[ab] | 8.9[ab] | 0.7 | 1.0[ab] |
| Surfactant+ Organic acid | 36.5[a] | 65.7[a] | 25.0[ab] | 8.5[ab] | 0.4 | 0.4[c] |
| Yeast Culture | 33.3[a] | 64.3[ab] | 25.3[ab] | 7.0[a] | 1.2 | 1.0[a] |
| Surfactant + Yeast Culture | 36.6[a] | 66.8[a] | 23.2[ab] | 9.1[ab] | 0.2 | 0.5[bc] |
| Surfactant + Yeast Culture + Organic acid | 38.1[a] | 65.1[a] | 25.0[ab] | 8.7[ab] | 0.5 | 0.6[abc] |

Means in the same column with differing superscript letters are significantly different (p<0.05)

*Conclusions*

Nutrients in fermentation solubles obscure the RAFA effects of this additive, and may not be directly compared with other RAFA

Combination of Organic acid and surfactant showed additivity in decreasing n-Valerate concentration, a key indicator of protein degradation

This trial indicated that a additivity adjustments may be applied to $K_B$ for Organic acid and Surfactant using the ratio of rumen active feed additive valerate production (i-Valeric acid plus n-Valeric acid) in the combination treatment to that of either control (Organic acid or Surfactant alone). Using this approach, $K_B$ can be adjusted by the following factors:

$$\text{Organic acid} + \text{Surfactant/Surfactant} = 0.80/1.7 = 0.47$$

$$\text{Organic acid} + \text{Surfactant/Organic acid} = 0.80/2.2 = 0.36$$

Average adjustment factor is 0.42

Other additives failed to show any statistically significant additive effects on $K_B$ in this experiment

Changes in gas yield and DM could be used to estimate effects of RAFA on carbohydrate rates of disappearance

*c. Combination of monensin, organic acid, yeast culture and-fermentation solubles*

The protocol used in Example 3a was also used in 3c to investigate the additive effects of other RAFA

Table 17. Treatments and levels of Monensin sodium, Organic acid, Yeast culture and Fermentation solubles.

| Experiment | Experiment Treatment Level |
|---|---|
| Treatment | Level in Rumen Fluid |
| TMR + Monensin | 6.6 mg/L Monensin |
| TMR + Organic acid | 250 mg/L Organic acid |
| TMR + Monensin and Organic acid | 6.6 mg/L Monensin + 250 mg/L Organic acid |
| TMR + Yeast culture | 643 mg/L Yeast culture |

(continued)

| Experiment | Experiment Treatment Level |
|---|---|
| TMR + Monensin and Yeast culture | 6.6 mg/L Monensin + 643 mg/L Yeast culture |
| TMR + Fermentation solubles | 12 g/L Fermentation solubles |
| TMR + Monensin and Fermentation solubles | 6.6 mg/L Monensin + 12 g/L Fermentation solubles |
| TMR + Monensin, Fermentation solubles, Organic acid, Yeast culture | 6.6 mg/L Monensin + 12 g/L Fermentation solubles + 250 mg/L Organic acid + 643 mg/L Yeast culture |

Statistical summaries were tabulated in Tables 18-20 below for Mean Gas Production (0 to 6 hours incubation), DMD (Dry Matter Digestibility) %, VFA Tot. (Volatile Fatty Acids total moles), Acetic, Propionic, I-Butyric, n-Butyric, Isovaleric, and n-Valeric acids (molar percentages).

Table 18. Gas production (ml) calculated as increase over negative Control

| Treatment | Mean Gas ml 0-6 hr |
|---|---|
| Monensin | -0.9[b] |
| Organic acid | 0.4[b] |
| Monensin and Organic acid | -0.2[b] |
| Yeast culture | 1.3[b] |
| Monensin and Yeast culture | 1.4[b] |
| Fermentation solubles | 14.3[a] |
| Monensin and Fermentation solubles | 10.3[a] |
| Monensin, Fermentation solubles, Organic acid, Yeast culture | 11.5[a] |

Means within the same column of data having differing subscripts different significantly ($P < 0.05$).
Fermentation solubles increased gas production volume compared to other treatments, due to the higher level of inclusion and nutrients in this product. There was no significant change in gas production over the negative control when other RAFA were included either singly or in a combination (Table 18).
When DMD was examined, there was no statistically significant effect of the combinations of RAFA (Table 19).

Table 19: Dry Matter Digestibility % (DMD)

| Item | DMD % |
|---|---|
| Monensin | 19.4[ad] |
| Organic acid | 20.7[acd] |
| Monensin and Organic acid | 19.8[d] |
| Yeast culture | 23.0[abcd] |
| Monensin and Yeast culture | 23.6[cd] |
| Fermentation solubles | 22.9[abcd] |
| Monensin and Fermentation solubles | 25.0[bc] |
| Monensin, Fermentation solubles, Organic acid, Yeast culture | 21.3[abcd] |

Means within the same column of data having differing subscripts different significantly ($P < 0.05$).
VFA data (Table 20) showed no synergistic effects of the different combinations of RAFA with surfactant on VFA yield, although treatments containing fermentation solubles were significantly higher in VFA production than the other treatments, probably due to the nutrients added in the fermentation solubles. The combination of Monensin and Organic acid significantly depressed concentrations of i-valeric and n-valeric acids compared to either RAFA alone. Similarly, the combination of yeast culture and monensin decreased i-valeric and n-valeric acid concentrations more than when the two RAFA were included separately. There was an apparent decrease in i-valeric acid in response to the 4-way combination of Monensin, Organic acid, fermentation solubles and yeast culture, when compared to monensin and fermentation solubles alone. However this effect may be attributed to the inclusion of Monensin with yeast culture or Monensin with Organic acid, with no additional benefit of the fermentation solubles.

Table 20: VFA Expressed as total yields (mmol/L) and molar percentages

| Treatment | VFA total | VFA (mmol/100 mmol) | | | | | |
|---|---|---|---|---|---|---|---|
| | | Acetic | Prop | n-But | i-But | n-Val | i-Val |
| Monensin | 41.6[b] | 60.5 | 22.4[ab] | 10.2 | 4.1[bc] | 1.2[abc] | 1.5[abd] |
| Organic acid | 47.1[b] | 65.0 | 23.4[ab] | 7.5 | 1.2[a] | 1.2[ac] | 1.6[ab] |
| Monensin and Organic acid | 47.9[b] | 62.2 | 23.9[ab] | 8.7 | 3.6[c] | 0.8[d] | 0.8[e] |
| Yeast culture | 47.7[b] | 64.4 | 22.7[ab] | 8.6 | 1.2[a] | 1.3[a] | 1.8[b] |
| Monensin and Yeast culture | 48.6[b] | 64.6 | 20.7[b] | 9.2 | 3.4[c] | 0.9[cd] | 1.1[de] |
| Fermentation solubles | 64.2[a] | 60.5 | 26.6[ab] | 9.1 | 1.3[a] | 1.3[a] | 1.2[acde] |
| Monensin and Fermentation solubles | 62.6[a] | 58.4 | 28.7[ab] | 8.7 | 2.1[ac] | 1.0[abcd] | 0.8[cde] |
| Monensin, Fermentation solubles, Organic acid, Yeast culture | 69.2[a] | 57.1 | 27.9[a] | 8.4 | 3.1[c] | 0.9[bcd] | 0.6[abdc] |

Figures in the same column with differing superscript letters are significantly different (p<0.05)

*Conclusions*

Combination of Organic acid and Monsensin showed additivity in decreasing i-valerate and n-Valerate concentrations, which are key indicators of protein degradation

Combination of yeast culture and Monsensin showed additivity in decreasing I-valerate and n-Valerate concentrations

Combination of Fermentation solubles and Monsensin showed no additivity in decreasing I-valerate and n-Valerate concentrations

This trial indicated that additivity adjustments may be applied to the $K_B$ for Organic acid with Monensin as well as yeast culture with Monensin using the ratio of rumen active feed additive valerate production (i-Valeric acid plus n-Valeric acid) in the combination treatment to that of either control (Organic acid, Monensin or Yeast culture alone). Using this approach, $K_B$ can be adjusted by the following factors:

$$\text{Organic acid} + \text{Monensin/Monensin} = 1.6/2.7 = 0.59$$

$$\text{Organic acid} + \text{Monensin /Organic acid} = 1.6/2.8 = 0.57$$

Average adjustment factor is 0.58

$$\text{Yeast culture} + \text{Monensin/Monensin} = 2.0/2.7 = 0.74$$

$$\text{Yeast culture} + \text{Monensin /yeast culture} = 2.0/3.1 = 0.65$$

Average adjustment factor is 0.69

The above Examples show how a person skilled in the art, with little experimentation, can determine the adjustment parameters for use in the method, for a variety of RAFA and RAFA combinations. The same Examples can be repeated for other known or suspected RAFA, to determine adjustment parameters for those RAFA, for use in the model.

*Example 4: Use of the method*

An "in field" study was performed, using 6,661 animals located in twenty-seven dairy herds across Canada and the Northern USA in a two period study. In Period 1, the animals were given control diets, formulated to meet the expected milk production using the standard, prior art method for determining least cost feed formulation. In Period 2, the animals were given diets formulated utilizing the presently described method, i.e. a method wherein the determination of LCF formulation took into account the addition of RAFA. The RAFA considered were Monensin sodium, Yeast and organic acids. The adjustment parameters were determined in a manner similar to that described above.
Milk yield, composition and.concentrate contribution of the diets was recorded.
Data were compiled and a paired t-test, using farm as the experimental unit, was run to determine the effects of the change in formulation.

Table 21: Summary of milk yield, composition and concentrate contribution to diets

|  | Daily Ration Cost per cow (% of Control) | Milk Yield, kg/d | Milk Fat % | Milk Protein % |
|---|---|---|---|---|
| Control | 100 | 32.43 | 3.75 | 3.23 |
| Test | 95.6 | 32.54 | 3.77 | 3.21 |
| SED | 1.19 | 0.328 | 0.055 | 0.021 |
| P Value | <0.01 | >0.1 | >0.10 | >0.1 |

There was no significant difference between performances of the cows in the two groups. Each pair of diets supplied the same nutrient specifications.
However, the daily ration cost was decreased in excess of 4 percent per cow per day by the use of the method as described herein.
Diets presented were formulated and fed on farm with no indication of a decrease in milk yield or composition, nor any health problems, indicating that the use of the rumen modifiers in this way was successful.

*Example 5: Comparison of method to prior art method*

A comparison of the prior art method, and the present method, is summarized for one example cow in tables 22 and 23, below:

Table 22: Example Ingredient and use of Rumen Active Feed Additive effects
Using NRC 2001 values for Soybean meal (48% CP, solvent extracted)

Calculation of UIP according to NRC:

Feed Name: Soybean Meal, solv. 48% CP
International Feed Number     5-20-638
Dry Matter (% As Fed) 89.50
CP (%DM)     53.80
Protein-A (%CP)     15.00
Protein-B (%CP)     84.4
Protein-C (%CP)     0.60
Protein Digestion Rate (%/hr)     7.50
Passage rate ($K_S$)     7.44
RUP $= B(K_S/CK_B+K_S))+C$     42.63
RUP, g/kg CP     229

Rumen Active Feed Additive Effect on $K_S$     0.95
RUP $= B(K_S/(((K_B*0.95)+K_S)+C$     43.70
RUP, g/kg CP     235

Table 23: Determining the values for modifying kinetic factors using Rumen Active Feed Additives

| Examples of formulating diets for dairy cows | | |
|---|---|---|
| Farm 1 | Daily Amount on As Fed basis, lb per day | |
| Ingredient | Without RAFA | With RAFA |
| Corn Silage | 38.900 | 38.900 |
| Haylage | 24.540 | 26.145 |
| Corn | 8.704 | 8.089 |
| High Moisture Shelled Corn | 6.000 | 6.000 |
| Whole Cottonseed | 3.755 | 4.249 |
| Hi-Pro Soymeal | 2.751 | 5.000 |
| Hi-Pro Com Gluten Meal | 1.063 | 0.369 |
| Feather Meal | 0.688 | 0.342 |
| Porcine Meat Meal | 0.587 | 0.538 |
| Blood Meal | 0.337 | 0.000 |
| Mineral and Vitamins | 0.079 | 1.151 |
| Monensin sodium | 0.003 | 0.003 |
| As Fed Intake | 88.41 | 90.79 |
| Dry Matter Intake | 46.00 | 46.00 |
| Cost (per cow per day) | 100% | 94% |
| | | |
| Animal Definition | | |
| Lactation | 2 | |
| Days in Milk | 55 | |
| Milk Yield, lb/d | 84.5 | |
| Milk Fat % | 3.8 | |
| Milk Protein % | 3.2 | |
| Liveweight | 1400 | |
| Farm 2 | Daily Amount on As Fed basis, lb per day | |
| | Without RAFA | With RAFA |
| Com Silage | 47.000 | 41.871 |
| Haylage | 31.394 | 20.800 |
| Corn Distillers Grains | 1.217 | 1.468 |
| Corn | 7.399 | 11.143 |
| Roasted Soybeans | 3.581 | 3.581 |
| Wheat Shorts | 3.500 | 0.000 |
| Hi-Pro Soymeal | 0.142 | 0.273 |
| Porcine Meat Meal | 0.988 | 0.988 |

(continued)

| Farm 2 | Daily Amount on As Fed basis, Ib per day | |
| --- | --- | --- |
| | Without RAFA | With RAFA |
| Whole Cottonseeds | 1.000 | 0.973 |
| ULTIMATE | 0.200 | 0.200 |
| Hi-Pro Corn Gluten Meal | 1.067 | 0.749 |
| Corn Gluten Feed | 0.450 | 0.000 |
| Feather Meal | 0.688 | 0.644 |
| Mineral and Vitamins | 0.987 | 1.057 |
| Monensin sodium | 0.003 | 0.003 |
| As Fed Intake | 99.62 | 83.75 |
| Dry Matter Intake | 47.25 | 47.25 |
| Cost (per cow per day) | 100% | 95% |
| | | |
| Animal Definition | | |
| Lactation | 2 | |
| Days in Milk | 55 | |
| Milk Yield, lb/d | 94 | |
| Milk Fat % | 3.8 | |
| Milk Protein % | 3.1 | |
| Liveweight | 1300 | |

Table 24. Ranges of values for Rumen Active Feed Additives, and comparison of Perfolact nomenclature with that of CNCPS for reference. CNCPS nomenclature taken from Sniffen et al 1992; Pitt et al 1996; Rumen active feed additives taken from Perfolact model as used in Example 4

| PerfoLact | CNCPS | Control | Surfactant | Ess. Oil | Ferm. Sol | Veg. Oil | Yeast | Monensin | Organic Acids |
|---|---|---|---|---|---|---|---|---|---|
| A | A (NPN) | | | | | | | | |
| | $B_1$ (Rapid) | | | | | | | | |
| B | $B_2$ (degraded/ escape) | | | | | | | | |
| | $B_3$ (Escape) | | | | | | | | |
| C | C (ADIN) | | | | | | | | |
| D | CA (sugars) | | | | | | | | |
| E | $CB_1$ (Starch) | | | | | | | | |
| F | $CB_2$ (cell wall) | | | | | | | | |
| G | CC (Indigestible) | | | | | | | | |
| $K_A$ | $RDPB_1$ (Rate $B_1$) | | | | | | | | |
| | $RDPB_2$ (Rate $B_2$) | | | | | | | | |
| $K_B$ | $RDPB_3$ (Rate $B_3$) | 1 | 0.2-0.95 | 0.83-0.95 | 0.75-0.93 | 0.85-1.17 | | 0.41-0.89 | |
| $K_7$ | RDCA | 1 | | | | | | | |
| $K_8$ | $RDCB_1$ | 1 | 0.85-94 | | | | | | |
| $K_9$ | $RDCB_2$ | 1 | 0.76-0.98 | | 0.76-0.98 | | | | |

It will be apparent to those skilled in the art that the benefits of these RAFA can be applied to the supply of amino acids and VFA to the animal as derivatives of the main effects on protein and carbohydrate digestion.

It will be evident to those skilled in the art that this approach to the use of feed additives in diet formulation is not limited to use in ruminant diets. The invention is that the approach can be applied to any LCF approach where Feed Additives (not necessarily RAFA) are known to affect the nutritional value of ingredients e.g. use of Phytase or other enzymes in monogastric diets.

**References**

Benchaar, C., J. Rivest, C. Pomar, and J. Chiquette. 1998. Prediction of methane production from dairy cows using existing mechanistic models and regression equations J Anim Sci 1998 76: 617-627.

Cheeke, P.R. 1999. Feed Additives. Pages 230-259. In: Applied animal nutrition: Feeds and Feeding. Second Edition, Prentice Hall, Upper Saddle River, NJ.

Enjalbert, F., M. Moncoulon, M. Vemay and D. Griess. 1994. Effects of different forms of polyunsaturated fatty acids on rumen fermentation and total nutrient digestibility of sheep fed prairie hay based diets. Small Ruminant Research. 14: 127-135.

Eun, Jong-Su, V. Fellner, L. W. Whitlow and B. A. Hopkins. 2000. Influence of yeast culture on fermentation by ruminal microorganisms in continuous culture. Proceedings of the 14th Annual North Carolina Dairy Conf., p47-52.

Evans, J.D. and S.A. Martin. 1997. Factors affecting lactate and malate utilization by Selenomonas ruminantium. Applied Environmental Microbiology 63:4852-4858.

Evans, E.H. and R.J. Patterson. 1985. Use of dynamic modelling seen as a good way to formulate crude protein, amino acid requirements for cattle diets. Feedstuffs 1985 October 14th Volume 57 (42)

Fox, D.G., C. J. Sniffen, J.D. O'Connor, J.B. Russell and P.J. Van Soest. 1992. A Net Carbohydrate and Protein System for Evaluating Cattle Diets: III. Cattle Requirements and Diet Adequacy. Journal of Animal Science. 70:3578-3796.

Fox, D. 1992. Using Computer Models In Extension to Develop More Profitable Feeding Systems Computer Applications in Animal Agriculture, Workshop, (June 1992) The National Dairy Database.

Galligan, D. 1997. CPM-Dairy: Software that brings a new approach to dairy nutrition. Bellwether, Newsmagazine of the University of Pennsylvania No.41 Fall/Winter 1997 page 1-4 Hoover, W.H., T.M. Miller, J.E. Nocek, and W.E. Julien. 1998. Interaction between Fermenten™ or soybean meal and fermentability of carbohydrate source on microbial yield and efficiency in continuous culture. Journal of Animal Science 79:80 (Abstr)

Julien, William E. 2001. Feed additive for ruminant animals. US Patent No. 6,312,710 Mackintosh, E. D., R. H. Phipps, J. D. Sutton, D. J. Humphries and J.J.D. Wilkinson. 2002. Effect of monensin on rumen fermentation and digestion and milk production in lactating dairy cows. Journal of Animal and Feed Science 11:399-410

Minson, D. J. (1998), A history of in vitro techniques. In: Occasional Publication No. 22 - British Society of Animal Science ed. E.R. Deaville, E. Owen, A.T. Adesogan, C. Rymer, J.A. Huntington and T.L.J. Lawrence pp13-19

Ørskov, E.R. and I. McDonald. 1979. The estimation of protein degradability in the rumen from incubation measurements weighted according to the rate of passage. Journal of Agricultural Science (Cambridge) 92:499-503

Pitt, R.E., J. S. Van Kessel, D. G. Fox, A. N. Pell, M. C. Barry, and P. J. Van Soest (1996). Prediction of ruminal volatile fatty acids and pH within the net carbohydrate and protein system. J Anim Sci 74: 226-244.

Russell, J.B., J.D. O'Connor, D.G. Fox, P.J. Van Soest, and C. J. Sniffen. 1991. A Net Carbohydrate and Protein System for Evaluating Cattle Diets: I. Ruminal Fermentation. Journal of Animal Science. 70:3551-3561

Sniffen, C.J., J. D. O'Connor, P. J. Van Soest, D. G. Fox, and J. B. Russell. 1992. A net carbohydrate and protein system for evaluating cattle diets: II. Carbohydrate and protein availability. J Anim Sci 70: 3562-3577

Wallace, R. J., L. Arthaud and C.J. Newbold. 1994. Influence of Yucca extract on rumenal ammonia concentrations and ruminal microorganisms. Applied Environmental Microbiology. 60:1762-1767.

Wallace, R.J., N.R. McEwan, F. R. McIntosh, B. Tefedegne and C. J. Newbold. 2002. Natural products as manipulators of rumen fermentation. Proceedings of the Symposium of the International Livestock Institute. Korea. P1-17.

**Claims**

1. A method for preparing a feed formulation for a ruminant animal, comprising:

   a. Selecting at least one desired feedstuff to be fed to the ruminant animal, said at least one feedstuff having a nutrient composition and a cost, said nutrient composition having a quantity of nutrient for each of a multiplicity of nutrients;

   b. Providing a definition of animal nutrient requirements for the ruminant animal, said definition of animal nutrient requirements having a minimum nutrient requirement and/or a maximum nutrient requirement for a multiplicity of nutrients;

c. selecting at least one potential Rumen Active Feed Additive (RAFA);

d. Determining the effect of the selection of said potential RAFA to the nutrient composition of each desired feedstuff;

e. Calculating the revised nutrient composition of each desired feedstuff from the effect of said potential RAFA and from the nutrient composition of said desired feedstuff;

f. Determining a least cost feed formulation by calculating a feedstuff mix comprising a quantity for each desired feedstuff, wherein the feedstuff mix provides the minimum and/or maximum nutrient requirements at the lowest possible cost, as calculated using the revised nutrient composition of each desired feedstuff; and

g. Preparing said least cost feed formulation by mixing said quantity of said at least one desired feedstuff with said potential RAFA.

2. The method of claim 1 wherein the definition of animal nutrient requirements is calculated using a selection of animal data for said ruminant animal.

3. The method of claim 2 wherein the animal data comprises one or more of the following alternatives: lactation data, days in milk data, milk yield data, milk fat percentage data, milk protein percentage data, or liveweight data.

4. The method of any one of claims 1-3 wherein the effect of the at least one potential Rumen Active Feed Additive (RAFA) to the nutrient composition of each desired feedstuff is a cumulative effect of more than one RAFA.

5. The method of any one of claims 1-4 wherein the potential RAFA comprises one or more of the following alternatives: surfactant, ionophore, bioactive peptide, additive which stimulates microbial activity, additives which inhibit microbial activity, direct fed live microbial cultures, high phenolic plant extracts, saponins, natural extracts, unprotected fats, unprotected oils, synthetic flavoring substances, oleoresins, mixed branched chain volatile fatty acids, buffers, surface active agents, antibiotic, organic acids, or supplementary enzymes.

6. The method of claim 5 wherein the antibiotic is an approved feed antibiotic.

7. The method of claim 6 wherein the antibiotic is monensin sodium.

8. The method of claim 5 wherein the ionophore is monensin sodium.

9. The method of claim 5 wherein the additive which stimulates microbial activity is one or more of the following alternatives: yeast culture, live yeast, botanical, or fermentation solubles.

10. The method of claim 5 wherein the additive which inhibits microbial activity is one or more of the following alternatives: monensin sodium or essential oils.

11. The method of claim 5 wherein the high phenolic plant extract is a botanical.

12. The method of claim 5 wherein the natural extract is a botanical.

13. The method of claim 5 wherein the flavoring substance is one or more of the following alternatives: a botanical or an essential oil.

14. The method of claim 5 wherein the one or more potential RAFA is a combination of RAFA selected from the group consisting of (1) fermentation solubles, organic acid and surfactant; (2) monensin sodium and organic acid; (3) yeast culture and monensin sodium; (4) monensin sodium, organic acid, fermentation solubles, and yeast culture; (5) monensin sodium and calcium salt of soy oil; and (6) monensin sodium and soy oil.

15. The method of any one of claims 1-14 further comprising the step of providing at least one feedstuff constraint, wherein said feedstuff constraint limits either a minimum or a maximum quantity of a feedstuff in the feedstuff mix.

16. The method of any one of claims 1-15 further comprising the step of providing at least one nutrient constraint, wherein said nutrient constraint limits either a minimum or a maximum quantity of a nutrient in the feedstuff mix.

17. The method of any one of claims 1-16 wherein the nutrient composition and cost of the at least one desired foodstuff is located in a database.

**18.** The method of claim 16 wherein the database is updated automatically.

**19.** The method of claim 1 wherein step (e) is done by a computer.

**20.** The method of claim 1 wherein step (f) is done by a computer.

**21.** The method of any one of claims 1-20 wherein the calculation of the revised nutrient composition of each desired feedstuff is made by determining a coefficient by which to correct the quantity of nutrient.

**22.** The method of any one of claims 1-21 wherein the calculation of the feedstuff mix is through the use of the Perfolact method.

**Patentansprüche**

**1.** Ein Verfahren zur Herstellung einer Futterformulierung für ein wiederkäuendes Tier, umfassend:

> a. Auswählen von mindestens einem gewünschten Futtermittel, das an das wiederkäuendes Tier verfüttert werden soll, wobei das mindestens eine Futtermittel eine Nährstoffzusammensetzung und einen Kostenbeitrag besitzen, wobei das mindestens eine Futtermittel eine Nährstoffmenge für jedes aus einer Vielzahl von Nährstoffen hat;
> b. Bereitstellen einer Definition von tierischen Nährstoff-Anforderungen für das wiederkäuendes Tier, wobei die Definition von tierischen Nährstoff-Anforderungen eine minimale Nährstoff-Anforderung und/oder eine maximale Nährstoff-Anforderung für eine Vielzahl von Nährstoffen besitzt;
> c. Auswählen von mindestens einen potentiellen Rumen Active Feed Additiv (RAFA);
> d. Bestimmen der Wirkung der Auswahl des potentiellen Rumen Active Feed Additivs auf die Nährstoffzusammensetzung eines jeden gewünschten Futtermittels;
> e. Berechnen der überarbeiteten Nährstoffzusammensetzung für jedes gewünschte Futtermittel aus der Wirkung des potentiellen RAFA und aus der Nährstoffzusammensetzung des gewünschten Futtermittels;
> f. Bestimmen von einer kostengünstigsten Futterformulierung durch Berechnen eines Futtermittel-Mix, das eine Menge von jedem gewünschten Futtermittel einschließt, wobei das Futtermittel-Mix die minimale Nährstoff-Anforderung und/oder die maximale Nährstoff-Anforderung zu dem geringstmöglichen Kostenbetrag bereitstellt, wie berechnet unter Verwendung der überarbeiteten Nährstoff-Zusammensetzung für jedes gewünscht Futtermittel; und
> g. Herstellen der kostengünstigsten Futterformulierung durch Mischen der Menge des mindestenes einen gewünschten Futtermittels mit dem potentiellen RAFA.

**2.** Das Verfahren nach Anspruch 1, wobei die Definition von tierischen Nährstoff-Anforderungen unter Verwendung einer Auswahl von tierischen Daten für das wiederkäuende Tier berechnet wird.

**3.** Das Verfahren nach Anspruch 2, wobei die tierischen Daten eine oder mehrere der folgenden Alternativen umfasst: Lakationsdaten, Daten über milchgebende Tage, Milchausbeute-Daten, Michfett-Prozentgehalt-Daten oder Lebendgewicht-Daten.

**4.** Das Verfahren nach einem der Ansprüche 1-3, wobei die Wirkung des mindestens einen potentiellen Rumen Active Feed Additivs (RAFA) auf die Nährstoff-Zusammensetzung von jedem Gewünschten Futtermittel eine kumulative Wirkungvon mehr als einem RAFA ist.

**5.** Das Verfahren nach einem der Ansprüche 1-4, wobei das potentielle RAFA ein oder mehrere der folgenden Alternativen einschließt: Tensid, Ionophor, boiaktives Peptid, Additiv, das die mikrobielle Aktivität stimuliert, Additive, die die mikrobielle Aktivität hemmen, die die verfütterten mikrobiellen Lebendkulturen stimulieren, phenolreiche Pflanzenextrakte, ungeschützte Fette, ungeschützte Öle, synthetische Aromasubstanzen, Oleoharze, verzweigt kettige flüchtige Fettsäuregemische, Puffer, Grenzflächenaktive Mittel, Antibiotikum, organische Säuren oder ergänzende Enzyme.

**6.** Das Verfahren nach Anspruch 5, wobei das Antibiotikum ein zugelassenes Futter-Antibiotikum ist.

**7.** Das Verfahren nach Anspruch 6, wobei das Antibiotikum Monensinnatrium ist.

**8.** Das Verfahren nach Anspruch 5, wobei das Ionophor Monensinnatrium ist.

**9.** Das Verfahren nach Anspruch 5, wobei das Additiv, das die mikrobielle Aktivität stimuliert, eine oder mehrere der folgenden Alternativen ist: Hefekultur, lebende Hefe, pflanzliche Stoffe oder Fermentationslösliche.

**10.** Das Verfahren nach Anspruch 5, wobei das Additiv, das die mikrobielle Aktivität hemmt, eine oder mehrere der folgenden Alternativen ist: Monensinnatrium oder essentielle Öle.

**11.** Das Verfahren nach Anspruch 5, wobei der phenolreiche Pflanzenextrakt ein pflanzlicher Stoff ist.

**12.** Das Verfahren nach Anspruch 5, wobei der natürliche Extrakt ein pflanzlicher Stoff ist.

**13.** Das Verfahren nach Anspruch 5, wobei die Aromasubstanz eine oder mehrere der folgenden Alternativen ist: ein pflanzliches oder ein essentielles Öl.

**14.** Das Verfahren nach Anspruch 5, wobei das eine odder die mehreren potientlle RAFA eine Kombination von RAFA sind, die aus der Gruppe ausgewählt sind, die besteht aus (1) Fermentationslöslichen, organischen Säuren und Tensiden; (2) Monensinnatrium und organischen Säuren; (3) Hefekultur und Monensinnatrium; (4) Monensinnatrium, organischen Säuren, Fermentationslöslichen, und Hefekultur; (5) Monensinnatrium und Calciumsalz von Soyaöl; und (6) Monensinnatrium und Soyaöl.

**15.** Das Verfahren nach einem der Ansprüche 1-14, das weiterhin den Schritt der Bereitstellung von mindestens einer Futtermittel-Vorgabe umfasst, wobei die Futtermittel-Vorgabe entweder eine minimale oder maximale Menge eines Futtermittels in dem Futtermittel-Mix beschränkt.

**16.** Das Verfahren nach einem der Ansprüche 1-15, das weiterhin den Schritt der Bereitstellung von mindestens einer Nährstoff-Vorgabe umfasst, wobei die Nährstoff-Vorgabe entweder eine minimale oder maximale Menge eines Nährstoffes in dem Futtermittel-Mix beschränkt.

**17.** Das Verfahren nach einem der Ansprüche 1-16, wobei die Nährstoff-Zusammensetzung und der Kostenbetrag des mindestens einen gewünschten Futtermittels in einer Datenbasis lokalisiert sind.

**18.** Das Verfahren nach Anspruch 16, wobei die Datenbasis automatisch aktualisiert wird.

**19.** Das Verfahren nach Anspruch 1, wobei Schritt (e) von einem Computer vorgenommen wird.

**20.** Das Verfahren nach Anspruch 1, wobei Schritt (f) von einem Computer vorgenommen wird.

**21.** Das Verfahren nach einem der Ansprüche 1-20, wobei die Berechnung der überarbeiteten Nährstoff-Zusammensetzung von jedem gewünschten Futtermittel durch Bestimmen eines Koeffizienten vorgenommen wird, durch den die Menge an Nährstoff korrigiert wird.

**22.** Das Verfahren nach einem der Ansprüche 1-21, wobei die Berechnung des Futtermittel-Mix' durch die Verwendung des Perfo-lact-Verfahrens erfolgt.

**Revendications**

**1.** Procédé de préparation d'une formulation d'aliment pour un ruminant, comprenant les étapes consistant à :

a. sélectionner au moins un aliment souhaité devant être fourni au ruminant, ledit au moins un aliment ayant une composition nutritive et un coût, ladite composition nutritive ayant une quantité de nutriment pour chacun d'une multiplicité de nutriments ;
b. fournir une définition des besoins nutritifs de l'animal pour le ruminant, ladite définition des besoins nutritifs de l'animal comportant un besoin nutritif minimal et/ou un besoin nutritif maximal pour une multiplicité de nutriments ;

c. choisir au moins un additif alimentaire actif pour ruminant (RAFA - Rumen Active Feed Additive) potentiel ;

d. déterminer l'effet de la sélection dudit RAFA potentiel sur la composition nutritive de chaque aliment souhaité ;

e. calculer la composition nutritive révisée de chaque aliment souhaité à partir de l'effet dudit RAFA potentiel et de la composition nutritive dudit aliment souhaité ;

f. déterminer une formulation d'aliment de moindre coût en calculant un mélange d'aliments comprenant une quantité de chaque aliment souhaité, dans lequel le mélange d'aliments fournit les besoins nutritifs minimums et/ou maximums au plus faible coût possible, comme calculé en utilisant la composition nutritive révisée de chaque aliment souhaité ; et

g. préparer ladite formulation d'aliment de moindre coût en mélangeant ladite quantité dudit au moins un aliment souhaité avec ledit RAFA potentiel.

2. Procédé selon la revendication 1, dans lequel la définition des besoins nutritifs de l'animal est calculée en utilisant une sélection de données d'animal pour ledit ruminant.

3. Procédé selon la revendication 2, dans lequel les données d'animal comprennent une ou plusieurs des choix suivants : données de lactation, données de jours en lait, données de production de lait, données de pourcentage de graisses du lait, données de pourcentage de protéines du lait, ou données de poids vif.

4. Procédé selon l'une quelconque des revendications 1 à 3, dans lequel l'effet de l'au moins un additif alimentaire actif pour ruminant (RAFA) sur la composition nutritive de chaque aliment souhaité est un effet cumulatif de plusieurs RAFA.

5. Procédé selon l'une quelconque des revendications 1 à 4, dans lequel le RAFA potentiel comprend une ou plusieurs des choix suivants : surfactant, ionophore, peptide bioactif, additif qui stimule l'activité microbienne, additifs qui inhibent l'activité microbienne, cultures microbiennes vivantes à administration directe, extraits de plantes à forte teneur en composés phénoliques, saponines, extraits naturels, graisses non protégées, huiles non protégées, substances aromatisantes synthétiques, oléorésines, acides gras volatils à chaîne ramifiée mélangés, tampons, agents actifs de surface, antibiotique, acides organiques ou enzymes supplémentaires.

6. Procédé selon la revendication 5, dans lequel l'antibiotique est un antibiotique alimentaire approuvé.

7. Procédé selon la revendication 6, dans lequel l'antibiotique est du sodium de monensin.

8. Procédé selon la revendication 5, dans lequel l'ionophore est du sodium de monensin.

9. Procédé selon la revendication 5, dans lequel l'additif qui stimule l'activité microbienne est une ou plusieurs des choix suivants : culture de levure, levure vivante, herbe médicinale ou solubles de fermentation.

10. Procédé selon la revendication 5, dans lequel l'additif qui inhibe l'activité microbienne est une ou plusieurs des choix suivants : sodium de monensin ou huiles essentielles.

11. Procédé selon la revendication 5, dans lequel l'extrait de plante à forte teneur en substances phénoliques est une plante médicinale.

12. Procédé selon la revendication 5, dans lequel l'extrait naturel est une plante médicinale.

13. Procédé selon la revendication 5, dans lequel la substance aromatisante est une ou plusieurs des choix suivants : une plante médicinale ou une huile essentielle.

14. Procédé selon la revendication 5, dans lequel le ou les RAFA potentiel(s) est(sont) une combinaison de RAFA choisis dans le groupe comprenant : (1) solubles de fermentation, acide organique et surfactant ; (2) sodium de monensin et acide organique ; (3) culture de levure et sodium de monensin ; (4) sodium de monensin, acide organique, solubles de fermentation et culture de levure ; (5) sodium de monensin et sel de calcium d'huile de soja ; et (6) sodium de monensin et huile de soja.

15. Procédé selon l'une quelconque des revendications 1 à 14, comprenant en outre l'étape consistant à fournir au moins une limite d'aliment, dans lequel ladite limite d'aliment limite soit une quantité minimale, soit une quantité maximale d'un aliment dans le mélange d'aliments.

**16.** Procédé selon l'une quelconque des revendications 1 à 15, comprenant en outre l'étape consistant à fournir au moins une limite de nutriment, dans lequel ladite limite de nutriment limite soit une quantité minimale, soit une quantité maximale d'un nutriment dans le mélange d'aliments.

**17.** Procédé selon l'une quelconque des revendications 1 à 16, dans lequel la composition nutritive et le coût de l'au moins un aliment souhaité se trouvent dans une base de données.

**18.** Procédé selon la revendication 16, dans lequel la base de données est mise à jour automatiquement.

**19.** Procédé selon la revendication 1, dans lequel l'étape (e) est effectuée par un ordinateur.

**20.** Procédé selon la revendication 1, dans lequel l'étape (f) est effectuée par un ordinateur.

**21.** Procédé selon l'une quelconque des revendications 1 à 20, dans lequel le calcul de la composition nutritive révisée de chaque aliment est effectué en déterminant un coefficient permettant de corriger la quantité de nutriment.

**22.** Procédé selon l'une quelconque des revendications 1 à 21, dans lequel le calcul du mélange d'aliments est effectué en utilisant le procédé Perfo-lact.

Figure 1
(Prior Art)

Figure 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20040076659 A1
- WO 2004034776 A

- US 6312710 B

**Non-patent literature cited in the description**

- **MACKINTOSH et al.** *Journal of Animal and Feed Sciences,* 2002, vol. 11, 399-410
- **BENCHAAR, C ; J. RIVEST ; C. POMAR ; J. CHIQUETTE.** Prediction of methane production from dairy cows using existing mechanistic models and regression equations. *J Anim Sci,* 1998, vol. 76, 617-627
- Feed Additives. **CHEEKE, P.R.** Applied animal nutrition: Feeds and Feeding. Prentice Hall, 1999, 230-259
- **ENJALBERT, F. ; M. MONCOULON ; M. VEMAY ; D. GRIESS.** Effects of different forms of polyunsaturated fatty acids on rumen fermentation and total nutrient digestibility of sheep fed prairie hay based diets. *Small Ruminant Research,* 1994, vol. 14, 127-135
- **EUN, JONG-SU ; V. FELLNER ; L. W. WHITLOW ; B. A. HOPKINS.** Influence of yeast culture on fermentation by ruminal microorganisms in continuous culture. *Proceedings of the 14th Annual North Carolina Dairy Conf,* 2000, 47-52
- **EVANS, J.D. ; S.A. MARTIN.** Factors affecting lactate and malate utilization by Selenomonas ruminantium. *Applied Environmental Microbiology,* 1997, vol. 63, 4852-4858
- **EVANS, E.H. ; R.J. PATTERSON.** Use of dynamic modelling seen as a good way to formulate crude protein, amino acid requirements for cattle diets. *Feedstuffs,* 14 October 1985, vol. 57 (42
- **FOX, D.G ; C. J. SNIFFEN ; J.D. O'CONNOR ; J.B. RUSSELL ; P.J. VAN SOEST.** A Net Carbohydrate and Protein System for Evaluating Cattle Diets: III. Cattle Requirements and Diet Adequacy. *Journal of Animal Science,* 1992, vol. 70, 3578-3796
- **FOX, D.** *Using Computer Models In Extension to Develop More Profitable Feeding Systems Computer Applications in Animal Agriculture,* June 1992
- **GALLIGAN, D.** *CPM-Dairy: Software that brings a new approach to dairy nutrition,* 1997, 1-4

- **HOOVER, W.H ; T.M. MILLER ; J.E. NOCEK ; W.E. JULIEN.** Interaction between Fermenten™ or soybean meal and fermentability of carbohydrate source on microbial yield and efficiency in continuous culture. *Journal of Animal Science,* 1998, vol. 79, 80
- **MACKINTOSH, E. D ; R. H. PHIPPS ; J. D. SUTTON ; D. J. HUMPHRIES ; J.J.D. WILKINSON.** Effect of monensin on rumen fermentation and digestion and milk production in lactating dairy cows. *Journal of Animal and Feed Science,* 2002, vol. 11, 399-410
- **MINSON, D. J.** A history of in vitro techniques. *Occasional Publication No. 22 - British Society of Animal Science,* 1998, 13-19
- **ØRSKOV, E.R. ; I. MCDONALD.** The estimation of protein degradability in the rumen from incubation measurements weighted according to the rate of passage. *Journal of Agricultural Science,* 1979, vol. 92, 499-503
- **PITT, R.E ; J. S. VAN KESSEL ; D. G. FOX ; A. N. PELL ; M. C. BARRY ; P. J. VAN SOEST.** Prediction of ruminal volatile fatty acids and pH within the net carbohydrate and protein system. *J Anim Sci,* 1996, vol. 74, 226-244
- **RUSSELL, J.B. ; J.D. O'CONNOR ; D.G. FOX ; P.J. VAN SOEST ; C. J. SNIFFEN.** A Net Carbohydrate and Protein System for Evaluating Cattle Diets: I. Ruminal Fermentation. *Journal of Animal Science,* 1991, vol. 70, 3551-3561
- **SNIFFEN, C.J ; J. D. O'CONNOR ; P. J. VAN SOEST ; D. G. FOX ; J. B. RUSSELL.** A net carbohydrate and protein system for evaluating cattle diets: II. Carbohydrate and protein availability. *J Anim Sci,* 1992, vol. 70, 3562-3577
- **WALLACE, R. J ; L. ARTHAUD ; C.J. NEWBOLD.** Influence of Yucca extract on rumenal ammonia concentrations and ruminal microorganisms. *Applied Environmental Microbiology,* 1994, vol. 60, 1762-1767

• **WALLACE, R.J ; N.R. MCEWAN ; F. R. MCINTOSH ; B. TEFEDEGNE ; C. J. NEWBOLD.** Natural products as manipulators of rumen fermentation. *Proceedings of the Symposium of the International Livestock Institute,* 2002, 1-17